# EUROPÄISCHE PATENTANMELDUNG

(11) **EP 0 927 579 A2**
(43) Veröffentlichungstag der Anmeldung: **07.07.1999**
(21) Anmeldenummer: 98123494.1
(22) Anmeldetag: 14.12.1998
(51) Int. Cl.: B03B 11/00, B01D 21/28

(54) **Vorrichtung und Verfahren zum Entfernen von Feststoffen aus einem Feststoff-Flüssigkeitsgemisch**

(30) Priorität: 29.12.1997 DE 19758038
(71) Anmelder: Noggerath Holding GmbH & Co. KG, D-31708 Ahnsen (DE)
(72) Erfinder: Rodenbeck,Arno-Wilhelm, Dipl.-Ing.Dipl.-Wirt.-Ing., 31675 Bückeburg (DE); Kroos, Hein, Dr., 31737 Rinteln (DE)
(74) Vertreter: Gleiss, Alf-Olav, Dr.jur. Dipl.-Ing.

(57) **Zusammenfassung**

Es wird eine Vorrichtung zum Austragen von Feststoffen aus einem Feststoff-Flüssigkeits-Gemisch, das in ein Auffangbecken eingebracht ist, mit einer Endlosfördereinrichtung, vorgeschlagen, die sich dadurch auszeichnet, daß das Auffangbecken (3) mindestens einen Wandbereich (41,43,45) aufweist, der mittels einer außerhalb des Auffangbeckens (3) angeordneten Vibrationseinrichtung (47) in Schwingungen versetzbar ist.

## Beschreibung

Die Erfindung betrifft eine Vorrichtung zum Austragen von Feststoffen aus einem Feststoff-Flüssigkeits-Gemisch gemäß Oberbegriff des Anspruchs 1 sowie ein Verfahren zum Austragen von Feststoffen aus einem Feststoff-Flüssigkeits-Gemisch gemäß Oberbegriff des Anspruchs 27.

Vorrichtungen und Verfahren der hier angesprochenen Art sind bekannt. Sie werden beispielsweise zur Aufbereitung von Abwässern eingesetzt, sei es im Zulauf von Kläranlagen oder zur Reinigung von Prozeßabwässern, außerdem bei der Aufbereitung von Müll mit Hilfe von Wasser.

Es hat sich herausgestellt, daß in vielen Fällen das Austragen der Feststoffe nicht effektiv genug ist, so daß sich lange Bearbeitungszeiten bei der Aufbereitung des als Feststoff-Flüssigkeits-Gemisch vorliegenden Abwassers ergeben.

Es ist daher Aufgabe der Erfindung, eine Vorrichtung zu schaffen, die diesen Nachteil nicht aufweist und eine effektive Austragung der Feststoffe aus dem Gemisch ermöglicht.

Zur Lösung dieser Aufgabe wird eine Vorrichtung vorgeschlagen, die die in Anspruch 1 genannten Merkmale umfaßt. Diese Vorrichtung zeichnet sich dadurch aus, daß ein Auffangbecken, welches der Aufnahme des Feststoff-Flüssigkeits-Gemisches dient mindestens einen Wandbereich umfaßt, der mit Hilfe einer außerhalb des Auffangbeckens angeordneten Vibrationseinrichtung in Schwingungen versetzbar ist. Durch die in das Feststoff-Flüssigkeits-Gemisch eingeleiteten Schwingungen wird der Absetzvorgang innerhalb des Gemisches gefördert, das heißt, die Feststoffe setzen sich beschleunigt im Bereich des Grundes des Auffangbeckens ab. Es ist daher möglich, diese Feststoffe mit Hilfe einer Endlosfördereinrichtung auszutragen. Als besonders vorteilhaft hat es sich erwiesen, daß die Vibrationseinrichtung außerhalb des Auffangbeckens angeordnet ist, weil dadurch einerseits eine Verschmutzung der Vibartionseinrichtung durch das Abwasser beziehungsweise das Feststoff-Flüssigkeits-Gemisch vermieden, und weil andererseits der Absetzvorgang innerhalb des Auffangbeckens nicht beeinträchtigt wird.

Besonders bevorzugt wird ein Ausführungsbeispiel der Vorrichtung, das sich dadurch auszeichnet, daß mehrere über die Länge des Auffangbeckens verteilt angeordnete Wandbereiche vorgesehen sind, die mit der Vibrationseinrichtung zusammenwirken. Durch diese Ausführungsform lassen sich Vibrationsschwingungen an mehreren Stellen in das Auffangbecken einleiten, so daß die Absetzung der Feststoffe besonders begünstigt wird.

Bevorzugt wird außerdem ein Ausführungsbeispiel der Vorrichtung, das sich dadurch auszeichnet, daß die Dichte des Feststoff -Flüssigkeits-Gemisches mit einer entsprechenden Einrichtung erfaßt und daß die Vibrationseinrichtung in Abhängigkeit von der Dichte angesteuert wird. Auf diese Weise ist es möglich, den Absetzvorgang gezielt zu beeinflussen.

Ein Ausführungsbeispiel der Vorrichtung wird deshalb bevorzugt, weil eine Endlosfördereinrichtung vorgesehen ist, die mit der Einrichtung zur Erfassung der Dichte des Feststoff-Flüssigkeits-Gemischs so gekoppelt ist, daß die Austragung von Feststoffen aus dem Gemisch in Abhängigkeit von der Dichte erfolgt. Durch diese Ausgestaltung kann die Vorrichtung sehr effektiv arbeiten, ohne daß es dazu eines besonders hohen konstruktiven Aufwandes bedürfte.

Weitere Ausgestaltungen ergeben sich aus den übrigen Unteransprüchen.

Zur Lösung der genannten Aufgabe wird außerdem ein Verfahren vorgeschlagen, das die in Anspruch 27 aufgeführten Merkmale umfaßt und das sich dadurch auszeichnet, daß die innerhalb eines Feststoff-Flüssigkeits-Gemisches vorliegenden Feststoffe vor der Austragung vorverdichtet werden, wobei die Verdichtung in Abhängigkeit zur Entfernung des Austragungsorts der Feststoffe mit unterschiedlicher Intensität erfolgt. Durch diese gezielte Beeinflussung der Vorverdichtung kann sichergestellt werden, daß die Förderfähigkeit der in dem Gemisch vorhandenen Feststoffe nicht beeinträchtigt wird.

Bevorzugt wird eine Ausführungsform des Verfahrens, die sich dadurch auszeichnet, daß die Austragung der Feststoffe in Abhängigkeit von deren Dichte erfolgt. Das heißt, die Austragung der Feststoffe erfolgt erst dann, wenn eine ausreichende Vorverdichtung erfolgt ist, wenn also die Austragung mit einer entsprechend hohen Effizienz erfolgen kann.

Schließlich wird eine Ausführungsform des Verfahrens bevorzugt, die sich dadurch auszeichnet, daß die Austragung der Feststoffe in Abhängigkeit von der Höhe der vorverdichteten Feststoffschicht erfolgt. Dies führt einerseits dazu, daß eine effektive Wirkung der Austrageinrichtung beziehungsweise des zum Austragen verwendeten Endlosförderers sichergestellt ist. Es kann andererseits erreicht werden, daß innerhalb der abgesetzten Feststoffschicht quasi ein Hohlraum (Tunnel) geschaffen wird, innerhalb dessen die Förderung mit der abgesetzten Feststoffe besonders effektiv erfolgen kann.

Die Erfindung wird im folgenden anhand einer Zeichnung erläutert. Es zeigen:
- Figur 1: eine Prinzipskizze einer ersten Vorrichtung zum Austragen von Feststoffen aus einem Feststoff-Flüssigkeits-Gemisch in Seitenansicht und
- Figur 2: eine Prinzipskizze einer zweiten Vorrichtung zum Austragen von Feststoffen aus einem Feststoff-Flüssigkeits-Gemisch.

Die Vorrichtung 1 zum Austragen von Feststoffen aus einem Feststoff-Flüssigkeits-Gemisch weist ein Auffangbecken 3 auf, in das über einen Zulauf 5, wie durch einen Doppelpfeil 7 angedeutet, das Feststoff -Flüssigkeits-Gemisch eingeleitet wird. Das Auffangbecken 3 ist hier als -beispielsweise rechteckiger- Behälter 9 ausgebildet, der hier beispielhaft allseitig geschlossen ist und außer dem Zulauf 5 einen Auslaß 11 aufweist, aus dem, wie durch ein Pfeil 13 angedeutet, die von Feststoffen zumindest weitgehend befreite Flüssigkeit austreten kann.

Die Vorrichtung 1 ist mit einer Endlosfördereinrichtung 15 versehen, die einen Horizontalförderer 17 mit mindestens einer Förderspirale 19 umfaßt, von der hier lediglich eine angedeutet ist. Sie wird über eine Antriebswelle 21 von einer Antriebseinrichtung, hier von einem Motor 23, in Rotation versetzt. Die Förderspirale 19 erstreckt sich über die gesamte Länge des Auffangbeckens 3 und durch ein Förderrohr 25, welches von dem Behälter 9 zu einem unter einem Winkel zum Horizontalförderer 17 verlaufenden Austragförderer 27 führt, der hier vertikal angeordnet ist. Dieser ist Teil der Endlosfördereinrichtung und weist mindestens eine Austragspirale 29 auf, die im Inneren eines rohrförmigen Gehäuses 31 angeordnet und über eine Antriebswelle 33 von einer Antriebseinrichtung, hier einem Motor 35, in Rotation versetzt wird. Die Austragspirale fördert das von der Förderspirale angelieferte Material, also die aus dem Feststoff-Flüssigkeits-Gemisch ausgetragenen Feststoffe von einem ersten Niveau N1 nach oben auf ein höher gelegenes zweites Niveau N2, so daß diese aus einer Auswurföffnung 37, wie durch eine Doppelpfeil 39 angedeutet, abgegeben werden können und beispielsweise in einen Transportbehälter gelangen.

Die Endlosfördereinrichtung 15 und deren Funktion sind grundsätzlich bekannt, so daß hier nicht näher darauf eingegangen werden soll. Es wird lediglich noch darauf hingewiesen, daß der Horizontalförderer 17 druckdicht mit dem Austragförderer 27 verbunden ist, so daß die aus dem Auffangbecken 3 ausgetragenen Feststoffe aus dem Gemisch ausgetragen und ausgeworfen werden können.

Das Auffangbecken 3 beziehungsweise der Behälter 9 weisen mindestens einen Wandbereich 41, hier insgesamt drei Wandbereiche 41, 43 und 45 auf, der beziehungsweise die über eine Vibrationseinrichtung 47 in Schwingungen versetzbar ist/sind.

Die Wandbereiche 41 bis 45 sind hier im unteren Bereich des Auffangbeckens 3 und auch noch im Bereich des Förderrohrs 25 vorgesehen. Die Vibrationseinrichtung 47 umfaßt separate jedem Wandbereich 41 bis 45 zugeordnete Vibrationseinheiten 49, 51 und 53, die jeweils einem Wandbereich 41, 43 beziehungsweise 45 zugeordnet sind. Die Wandbereiche sind über die Länge des Auffangbeckens 3 verteilt und hier etwa auf Höhe der Förderspirale 19 angeordnet.

Gestrichelt ist noch angedeutet, daß auch im Bereich des Austragförderers 27 wenigstens eine Vibrationseinheit 55 vorgesehen sein kann.

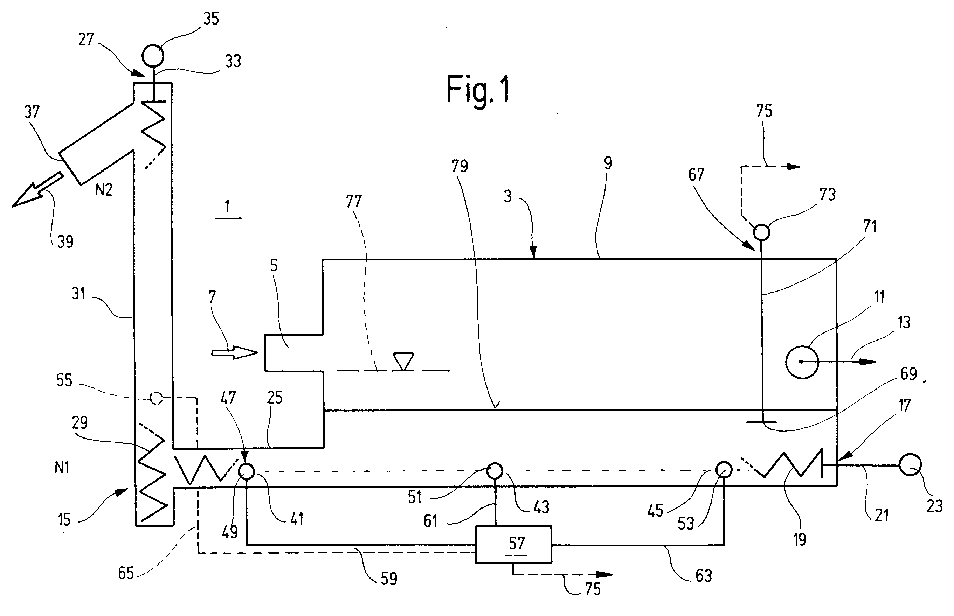

Figur 1 zeigt, daß die Vorrichtung 1 mit einer Steuereinrichtung 57 versehen ist, die über Steuerleitungen 59, 61 und 63 mit den Vibrationseinheiten 49, 51 und 53 verbunden ist. Es ist auch dargestellt, daß die optionale Vibrationseinheit 55 über eine eigene Steuerleitung 65 mit der Steuereinrichtung 57 verbunden ist.

Die Vorrichtung 1 ist außerdem mit einer Einrichtung 67 zur Erfassung der Dichte des Feststoff-Flüssigkeits-Gemisches beziehungsweise der Dichte der aus dem Gemisch abgesetzten Feststoffe versehen. Bei dem hier dargestellten Ausführungsbeispiel weist die Einrichtung 67 ein lediglich angedeutetes Flügelrad 69 auf, das über eine Antriebswelle 71 von einem Motor 73 in Rotation versetzt wird. Die Dichte der abgesetzten Feststoffe kann beispielsweise über die Leistungsaufnahme des Motors oder über die Rotationsgeschwindigkeit des Flügelrades beziehungsweise der Antriebswelle erfaßt werden. Derartige Dichte-Meßeinrichtungen sind bekannt, so daß hier auf deren Funktion nicht näher eingegangen wird. Es ist lediglich sicherzustellen, daß das Flügelrad nicht mit einer derartigen Geschwindigkeit angetrieben wird, daß der Absetzvorgang beeinträchtigt wird. Denkbar ist es im übrigen auch, hier Meßsensoren einzusetzen, die die Dichte der abgesetzten Feststoffe erfassen. In der Figur ist noch angedeutet, daß die Einrichtung 67 über eine Meßleitung 75, die hier gestrichelt angedeutet ist, mit der Steuereinrichtung 57 verbunden ist.

Durch eine gestrichelte Linie 77 ist der Wasserstand im Auffangbecken 3 beziehungsweise im Behälter 9 angedeutet.

Im folgenden wird auf die Funktion der Vorrichtung 1 beziehungsweise auf das Verfahren zum Austragen von Feststoffen aus einem Feststoff-Flüssigkeits-Gemisch näher eingegangen:

Das Feststoff-Flüssigkeits-Gemisch wird über den Zulauf 5 in das Auffangbecken 3 eingebracht, das heißt in das Innere des Behälters 9 eingeleitet. Die Wandbereiche des Auffangbeckens 3 beziehungsweise des Behälters 9 sind so elastisch ausgebildet, daß über eine Vibrationseinrichtung 47 Schwingungen in das Auffangbecken 3 beziehungsweise in das dort vorhandene Gemisch eingeleitet werden können. Besonders vorteilhaft ist es, daß hier mehrere über die Länge des Auffangbeckens verteilt angeordnete Vibrationseinheiten 49, 51 und 53 vorgesehen sind, die über die Steuereinrichtung 47 separat ansteuerbar sind. Die Steuereinrichtung 57 steuert die Vibrationseinheiten über die zugehörigen Steuerleitungen 59, 61 und 63 so an, daß sich die Feststoffe aus dem Gemisch absetzen.

Durch eine durchgezogene Linie 79 ist das maximale Niveau beziehungsweise die maximale Absetzhöhe der Feststoffe im Auffangbecken 3 beziehungsweise im Behälter 9 angedeutet. Wenn also sich die Feststoffe aus dem Gemisch so weit abgelagert haben, daß ein gewünschtes Absetzniveau erreicht ist, wird dies über die Einrichtung 67 festgestellt, beispielsweise dadurch, daß sich die Drehzahl des Flügelrades 69 reduziert beziehungsweise die Leistungsaufnahme des Motors 73 erhöht ist.

Bevorzugt wird die Vorrichtung 1 so betrieben beziehungsweise wird das Verfahren zum Austragen von Feststoffen so durchgeführt, daß eine Vorverdichtung der in dem Gemisch vorhandenen Feststoffe in Abhängigkeit vom Abstand des Förderrohrs 25 erfolgt. Die Vorverdichtung erfolgt über die gesamte Länge des Auffangbeckens 3, um die Feststoffe besonders effektiv aus dem Gemisch abzusondern. Die Intensität der Vorverdichtung wird durch die gezielte Ansteuerung der Vibrationseinheiten 49, 51 und 53 mit Hilfe der Steuereinrichtung 57 so gewählt, daß die Förderfähigkeit der aus dem Gemisch ausgefällten Feststoffe nicht frühzeitig beeinträchtigt wird. Es wird also sichergestellt, daß die Feststoffe sich nicht beispielsweise vermehrt in der Nähe des Motors 23 des Horizontalförderers 17 ablagern und die Förderspirale 19 behindern oder gar blockieren. Bei einem Ansteuerzyklus wird daher zunächst die Vibrationseinheit 49, dann die Vibrationseinheit 51 und schließlich die von der Austragspirale 29 am weitesten entfernte Vibrationseinheit 53 angesteuert. Die Ansteuer- und Pausenzeiten werden in Abhängigkeit von der Dichte oder nach einem vorgebbaren Zeitschema gewählt. Die Vibrationseinheiten können aber auch (zeitweise) parallel, also gleichzeitig aktiviert sein. Die Intensität der Vibrationen kann durch die Einschaltdauer aber auch durch unterschiedliche Unwuchten und/oder Massen der Vabrationseinheiten verändert werden.

Die Ansteuerung der Vibrationseinheiten 49, 51 und 53 erfolgt über die Steuereinrichtung 57 vorzugsweise so, daß sich die Feststoffe im Bereich des Horizontalförderers 17 so ablagern, daß sich quasi im abgesetzten Feststoffbereich ein Tunnel ergibt, innerhalb dessen die Förderspirale 19 in Rotation versetzt wird und das in dem Spiralengang befindliche Material beziehungsweise die Feststoffe aus diesem Tunnel ausgetragen werden, so daß diese über das Förderrohr 25 zum Austragsförderer 27 gelangen. Die Feststoffe können dann so von der Austragspirale 29 noch oben gefördert werden und aus der Auswurföffnung 27 fallen.

Um die Tunnelwirkung zu gewährleisten, wird die Ausbildung einer Feststoffschicht mit einer bestimmten Höhe sichergestellt, wobei die Höhe und der Verdichtungsgrad der abgesetzten Feststoffe mit Hilfe der Einrichtung 67 erfaßt werden können.

Je nach den vorgegebenen Sollwerten setzt die Steuereinrichtung 57 eine oder mehrere Vibrationseinheiten 49, 51 und 53 für einen vorbestimmten Zeitraum in Gang. Nach Erreichen eines definierten Dichtegrades der abgesetzten Feststoffe wird die Endlosfördereinrichtung 19 aktiviert. Das heißt über die Motoren 23 und 35 werden die Förderspirale 19 und die Austragsspirale 29 in Rotation versetzt, um abgesetzte Feststoffe aus dem Gemisch auszutragen.

Mit Hilfe der Einrichtung 67 wird auch der Abschaltzeitpunkt für die als Austragssystem wirkende Endlosfördereinrichtung 15 ermittelt, beispielsweise anhand der Höhe der abgesetzten Feststoffschicht beziehungsweise der in dieser Schicht gegebenen Dichte.

Bei einer vereinfachten Ausführungsform der Vorrichtung beziehungsweise des Verfahrens ist es möglich, die Vibrationseinheiten rein zeitgesteuert zu betreiben, das heißt die Vibrationszeit der verschiedenen Vibrationseinheiten verschieden zu wählen, und dabei auf die Erfassung der Höhe und/oder Dichte der abgesetzten Feststoffschicht zu verzichten.

Eine weitere Verdichtung kann, wie in der Figur angedeutet, durch die zusätzliche Vibrationseinheit 55 im Austragförderer 27 erfolgen. Dies beispielsweise dazu, um bei einem diskontinuierlichen Betrieb der Endlosfördereinrichtung 15 ein Rückstrom aus dem Austragförderer 27 in das Förderrohr 25 beziehungsweise in den Bereich des Horizontalförderers 17 zu vermeiden.

Aus dem oben Gesagten ergibt sich, daß die Vibrationseinrichtung 47 dazu dient, die Ablagerung der Feststoffe aus dem Feststoff-Flüssigkeits-Gemisch zu fördern und so einzustellen, daß sich eine hohe Effektivität beim Austragen der Feststoffe aus dem Gemisch ergibt. Es wird deutlich, daß das Auffangbecken 3 nur einzelne vibrationsfähige Wandbereiche aufzuweisen braucht. Es ist jedoch auch möglich, das Auffangbecken 3 beziehungsweise den Behälter 9 so auszubilden, beispielsweise mit Metallwänden zu versehen, daS diese grundsätzlich überall schwingfähig sind aber nur in den Bereichen vibrieren, in denen Vibrationseinheiten vorgesehen sind.

Es zeigt sich schließlich auch, daß durch die Einleitung von Schwingungen die Feststoffe in dem Gemisch aneinanderreiben, so daß Anhaftungen an den Feststoffen abgerieben werden können. Dies ist beispielsweise bei der Verwendung der Vorrichtung 1 im Zulauf von Kläranlagen besonders vorteilhaft, weil mineralische Stoffe beziehungsweise Sand, der aus einem Kanalsystem in die Vorrichtung 1 beziehungsweise in das Auffangbecken 3 eingeleitet wird, von organischen Anhaftungen befreit werden kann, die dann mit der Flüssigkeit über den Auslaß 11 und einer Kläranlage zugeführt werden können. Die mineralischen Stoffe beziehungsweise Sande fallen aus der Auswurföffnung 37 gereinigt und bereits weitgehend getrocknet aus und können ohne Belastung der Umwelt einer Deponie zugeführt beziehungsweise im Baubereich verwendet werden.

Ein wesentliches Merkmal der Vorrichtung 1 ist, daß die Vibrationseinheiten der Vibrationseinrichtung außerhalb des Auffangbeckens 3 beziehungsweise des Behälters 9 angeordnet sind und mit dem Feststoff-Flüssigkeits-Gemisch nicht in Berührung treten. Dadurch ergibt sich eine sehr hohe Funktionssicherheit der Vibrationseinheiten. Andererseits finden sich im Inneren des Austragbeckens beziehungsweise des Behälters keine vorspringenden Elemente, die einerseits den Absetzvorgang beeinträchtigen und andererseits die Austragung der Feststoffe aus dem Gemisch behindern könnten. Es zeigt sich außerdem, daß Service und Reparaturarbeiten an den Vibrationseinheiten besonders einfach durchführbar sind. Schließlich ergibt sich auch, daß bestehende Vorrichtungen mit einer derartigen Vibrationseinrichtung einfach und kostengünstig nachgerüstet werden können.

Aus der Beschreibung der Vorrichtung beziehungsweise der Erläuterung des Verfahrens wird deutlich, daß die Endlosfördereinrichtung 15 auch abgewandelt werden kann. Es ist denkbar, auch andere Fördereinrichtung einzusetzen beziehungsweise mehrere nebeneinanderliegende Förderspiralen/-schnecken am Grund des Auffangbeckens vorzusehen beziehungsweise den Austragförderer 27 mit mehreren nebeneinanderliegenden Austragspiralen/-schnecken auszustatten.

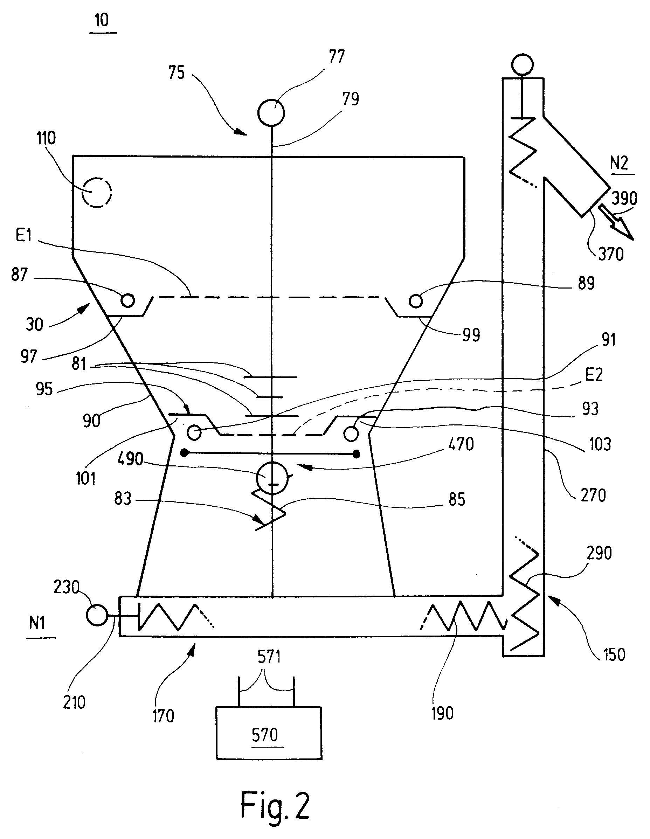

Figur 2 zeigt eine Vorrichtung 10 zum Austragen von Feststoffen aus einem Feststoff-Flüssigkeits-Gemisch mit einem Auffangbecken 30, das einen runden Behälter 90 aufweist. Derartige Vorrichtungen werden auch als Rundsandfang bezeichnet.

Die Vorrichtung 10 ist mit einer Endlosfördereinrichtung 150 ausgestattet, die aus dem Feststoff-Flüssigkeits-Gemisch ausgefällte Feststoffe von einem ersten Niveau N1 auf ein höher gelegenes zweites Niveau N2 befördert. Sie umfaßt einen Horizontalförderer 170 mit einer Förderspirale 190, die über eine Antriebswelle 210 von einer Antriebseinrichtung, hier von einem Motor 230, in Rotation versetzt wird. An ihrem dem Motor gegenüberliegenden Ende der Förderspirale 190 ist ein Austragförderer 270 der Endlosfördereinrichtung 150 vorgesehen, der ebenfalls als Spiralförderer ausgelegt ist und eine Austragsspirale 290 umfaßt. Die hier erwähnten Spiralen können auch als Schnecken ausgelegt sein.

Der Austragförderer 270 ist mit einer Auswurföffnung 370 versehen, über die, wie durch einen Doppelpfeil 390 angedeutet, aus dem Gemisch ausgetragene Feststoffe abgegeben werden können.

Die Vorrichtung 10 umfaßt gemäß Figur 2 ein Rührwerk 75 mit einem Antriebsmotor 77, der eine Antriebswelle 79 in Rotation versetzt. An dieser ist mindestens ein Arm, hier mehrere Arme 81 vorgesehen, die in verschiedenen Ebenen übereinander an der Antriebswelle 79 drehfest angebracht sind. Die Vorrichtung 10 ist mit einer Auflockerungseinrichtung 83 ausgestattet, die hier eine Auflockerungsspirale 85 aufweist, die hier ebenfalls zur Vereinfachung der Konstruktion über die Antriebswelle 79 von dem Antriebsmotor 77 in Rotation versetzbar ist.

Die Vorrichtung 10 ist mit einer Vibrationseinrichtung 470 versehen, die hier eine Vibrationseinheit 49 umfaßt, die außen am Behälter 90 angebracht ist. Es ist auch denkbar, mehrere derartige Vibrationseinheiten außen am Behälter 90 aber auch im Bereich des Horizontalförderers 170 und des Austragsförderers 270 vorzusehen.

Zur Funktion der Vorrichtung ist folgendes festzuhalten:

Das Feststoff-Flüssigkeits-Gemisch wird, wie dies bei derartigen Einrichtungen bekannt ist, tangential in den oberen Bereich des Behälters 90 eingeleitet, so daß eine umlaufende Rotationsströmung entsteht. Die Feststoffe sinken im Inneren des Behälters 90 ab, während die von den Feststoffen im wesentlichen gänzlich befreite Flüssigkeit über einen hier lediglich angedeuteten Auslaß 110 abgeleitet wird. Der Behälter 90 ist oben zylindrisch ausgebildet. An den oberen zylindrischen Teil schließt sich ein sich nach unten verengender konischer Bereich an. Im oberen Teil dieses Bereiches, auf einer gedachten, hier gestrichelt eingezeichneten Ebene E1 ist eine erste Belüftungseinheit 87 einer Belüftungseinrichtung vorgesehen. Auf derselben Ebene ist hier auf der gegenüberliegenden Seite des Behälters 90 eine zweite Belüftungseinheit 89 vorgesehen. Es ist auch möglich, auf dieser Ebene E1 ein umlaufendes Belüftungsrohr vorzusehen. Vorzugsweise sind die Belüftungseinheiten 87 und 89 als sogenannte Belüftungskerzen ausgebildet, die mit einem gasförmigen Medium, vorzugsweise mit Druckluft, beaufschlagbare Rohrabschnitte aufweisen, die eine gasdurchlässige Wandung umfassen. Diese kann durch eine Perforierung der Wandung realisiert werden, aber auch dadurch, daß das Rohr beziehungsweise Abschnitte dieses Rohres aus poröser Keramik bestehen. Eine Belüftungseinheit kann auch mehr als eine Belüftungskerze umfassen. Denkbar ist es auch, ein im Bereich der Ebene E1 angeordnetes umlaufendes Belüftungsrohr einzusetzen.

Der konisch sich nach unten verjüngende Bereich des Behälters 90 setzt sich in einem zylindrischen oder vorzugsweise sich konisch aufweitenden Bereich fort, der mit dem Horizontalförderer 170 verbunden ist. Die konische Aufweitung dieses Bereichs verhindert ein Verstopfen der Vorrichtung 10.

Am unteren Ende des sich konisch verjüngenden Bereichs, auf Höhe einer gedachten Ebene E2 sind eine dritte Belüftungseinheit 91 sowie eine vierte Belüftungseinheit 93 vorgesehen. Diese Belüftungseinheiten können identisch aufgebaut sein wie die erste und zweite Belüftungseinheit 87 und 89, so daß auf deren separate Beschreibung oben verwiesen werden kann.

Figur 2 zeigt, daß die Vibrationseinrichtung 470 beziehungsweise deren Vibrationseinheit 490 vorzugsweise im untersten Bereich des Behälters 90 angeordnet ist, nämlich in dem sich konisch erweiternden Bereich hier kurz unterhalb des Endes des sich nach unten konisch verjüngenden Bereichs des Behälters 90.

Figur 2 läßt auch erkennen, daß die Arme 81 des Rührwerks 75 im unteren Bereich des sich konisch verjüngenden Abschnitts des Behälters 90 angeordnet sind.

Die Belüftungseinrichtung mit den Belüftungseinheiten 87 bis 93 ist mit einer Luft- beziehungsweise Gasleiteinrichtung versehen, die den Belüftungseinheiten 87 bis 93 zugeordnete Leitbleche umfaßt. Die Leitbleche 97 und 99 der oberen Belüftungseinheiten 87 und 89 weisen einen an der Innenwand des Behälters befestigten, horizontalen Leitblechabschnitt auf, an den sich ein nach oben ragender Blechabschnitt anschließt, der unter einem Winkel zu dem horizontalen Leitblechabschnitt verläuft. Bei dem hier dargestellten Ausführungsbeispiel verlaufen die Blechabschnitte schräg nach innen zur Mittelachse des Behälters 90 beziehungsweise zur Antriebswelle 79. Sie sind nach oben gerichtet und verhindern, daß die aus den Belüftungseinheiten 87 und 89 ausströmende Luft Turbulenzen in die sich absetzenden Feststoffe einleiten, so daß der Absetzvorgang durch diese Belüftungseinheiten 87 und 89 nicht gestört wird. Die Belüftungseinheiten dienen dazu, organische Verunreinigungen nach oben auszutragen, so daß diese gemeinsam mit dem Wasser aus dem Auslaß 110 austreten.

Die Gasleiteinrichtung 95 weist außerdem Leitbleche 101 und 103 auf, die den unteren Belüftungseinheiten 91 und 93 zugeordnet sind und wiederum im wesentlichen horizontal verlaufende Leitblechabschnitte aufweisen, an die sich unter einem Winkel verlaufende Blechabschnitte anschließen. Diese sind hier nach unten gerichtet. Die Leitbleche 101 und 103 schützen damit die Belüftungseinheiten 91 und 93 vor den von oben herabsinkenden Feststoffen. Sie schirmen aber auch die Belüftungseinheiten 91 und 93 ab, so daß hier austretende Luft nicht ohne weiteres in den sich konisch nach unten verjüngenden Bereich des Behälters 90 gelangen kann, in dem eine von oben nach unten verlaufende laminare Strömung der sich absetzenden Feststoffe existiert.

Es wird hier deutlich, daß die Gasleiteinrichtung nicht nur aus Metall hergestellte Leitbleche zu umfassen braucht. Es können auch nichtmetallische Materialien eingesetzt werden.

Im folgenden wird auf die Funktion der Vorrichtung 10 näher eingegangen:

Wird ein Feststoff -Flüssigkeits-Gemisch in das Auffangbecken 30 beziehungsweise in den Behälter 90 eingeleitet, so wird im Inneren des Behälters, insbesondere im oberen zylindrischen Bereich, eine umlaufende Strömung erzeugt, die der Trennung der Feststoffe von den Flüssigkeitsanteilen des Gemisches dient. Durch die aus den Belüftungseinheiten 87 und 89 ausströmende Luft werden organische Partikel aus dem Gemisch nach oben ausgetragen und können so aus dem Auslaß 110 austreten.

Die Feststoffe sinken in dem sich konisch nach unten verjüngenden Bereich ab, wobei eine laminare Strömung ausgebildet wird. Durch das Leitblech 97 der ersten Belüftungseinheit 87 und das Leitblech 99 der zweiten Belüftungseinheit 89 wird verhindert, daß die nach oben strömende Luft die laminare Strömung und den Absetzvorgang beeinträchtigt.

Der Absetzvorgang wird durch die Vibrationseinrichtung 47 beziehungsweise deren Vibrationseinheit 49 gefördert, die Schwingungen in das Feststoff-Flüssigkeits-Gemisch im Behälter 90 einleitet. Unterhalb des konisch sich nach unten verjüngenden Bereichs des Behälters 90, der auch als Sedimentationsraum bezeichnet werden kann, verdichten sich die Feststoffe. Die Dichte der abgesetzten Feststoffe wird durch das Rührwerk 75 erfaßt, nämlich durch den Widerstand, den die Arme 81 beim Durchlaufen der Sedimentationszone erfahren. Die Dichte kann dabei anhand der Stromaufnahme des Motors 77 oder anhand dessen Drehzahl ermittelt werden, die sich bei steigender Dichte vermindert. Denkbar ist es auch, anstelle der Arme eine Meßsonde vorzusehen. Wesentlich ist, daß die Dichte in dem Sedimentationsraum erfaßt wird. Die Art und Weise spielt für die Funktion der Vorrichtung 10 allenfalls eine untergeordnete Bedeutung.

Die im unteren Bereich des Sedimentationsraums angeordneten Belüftungseinheiten 91 und 93, die sich also im Übergangsbereich zwischen dem sich konisch verjüngenden und konisch nach unten erweiterenden Bereich des Behälters 90 befinden, werden nur zeitweise aktiviert. Die hier austretenden Gase beziehungsweise die Luft dient dazu, organische Bestandteile aus der Schicht der sich absetzenden Feststoffe auszutragen. Die unteren Belüftungseinheiten 91 und 93 werden deshalb nur zeitweise aktiviert, um die laminare Strömung der sich absetzenden Feststoffe im Sedimentationsraum nicht zu stören. Die hier austretende Luft verbindet sich mit den organischen Bestandteilen und dient als deren Transportmittel.

Die Spirale 85 der Auflockerungseinrichtung 83, die in dem konisch nach unten weiter werdenden Bereich des Behälters 90 angeordnet ist, dient der Auflockerung und damit der mechanischen Reinigung der hier abgelagerten Feststoffe, die weiter nach unten zur Endlosfördereinrichtung 150 absinken.

Es kann eine Steuereinrichtung 570 vorgesehen werden, die, wie anhand von Figur 1 beschrieben, mit der Vibrationseinrichtung 470 zusammenwirkt und Steuerleitungen 571 aufweist. Es ist im übrigen möglich, die Steuereinrichtung 570 zur Steuerung der Belüftungseinheiten 87 bis 93 einzusetzen und schließlich auch dazu, den Horizontalförderer 170 und den Austragsförderer 270 der Endlosfördereinrichtung 150 anzusteuern.

Vorzugsweise ist, wie gesagt, vorgesehen, die oberen Belüftungseinheiten 87 und 89 praktisch kontinuierlich mit einem Gas beziehungsweise Luft zu beaufschlagen, während die unteren Belüftungseinheiten 91 und 93 nur relativ kurzzeitig mit Luft beziehungsweise Gas beaufschlagt werden, damit die laminare Strömung im Sedimentationsraum nicht gestört wird.

Bei der Vorrichtung 10 können auch noch Vibrationseinheiten im Bereich des Horizontal- beziehungsweise Austragförderers vorgesehen werden, die der weiteren Verdichtung der Feststoffe im Bereich der Endlosfördereinrichtung 150 dienen und die von der Steuereinrichtung 570 ansteuerbar sind. Dabei ist eine unabhängige Ansteuerung der Vibrationseinheiten denkbar also auch unabhängig von der Vibrationseinheit 490, die oben beschrieben wurde.

Wesentlich ist, daß mit Hilfe der Vorrichtung 10 eine Vorverdichtung der in dem Gemisch vorhandenen Feststoffe möglich ist. Insbesondere bei Gemischen mit einer geringen Konsistenz wird durch diese Vorverdichtung überhaupt erst das Austragen der Feststoffe aus dem Gemisch ermöglicht. Gleichzeitig wird durch die Verdichtung in dem Auffangbecken 30 beziehungsweise in dem Behälter 90 ein Stopf- beziehungsweise Pfropfen-Effekt erzielt, der verhindert, daß Flüssigkeit aus dem Auffangbecken 30 in den Austragförderer 270 gelangt. Dieser Stopf- beziehungsweise Pfropfen-Effekt kann durch Vibrationseinheiten im Bereich des Horizontal- beziehungsweise des Austragförderers noch verstärkt werden. Diese Vibrationseinheiten können ebenso ausgebildet sein und angesteuert werden, wie die bei dem in Figur 1 dargestellten Ausführungsbeispiel erläutert wurde.

Bei einem hier nicht dargestellten Ausführungsbeispiel kann auch vorgesehen werden, daß in der Mitte des in Figur 2 wiedergegebenen Auffangbeckens ein Austragförderer angeordnet ist, der beispielsweise dem Austragförderer 270 entspricht. Die abgesetzten Feststoffe könnten so direkt aus dem Austragbecken ausgetragen werden. Er müßte dann allerdings ein abgewandeltes Rührwerk eingesetzt werden.

Ein weiterer Vorteil der im Zusammenhang mit den Figuren 1 und 2 beschriebenen Verdichtung ist, daß die ausgetragenen Feststoffe weitgehend von der Flüssigkeit befreit sind und in vielen Fällen ein Nachtrocknen nicht erforderlich ist.

Auch bei der Vorrichtung 10 gemäß Figur 2 gilt, daß die Vibrationseinrichtung 470 nicht nur der Verdichtung der absinkenden Feststoffe dient, sondern auch dazu beiträgt, daß die Feststoffe in Schwingungen versetzt werden, so daß organische Anhaftungen abgerieben und entfernt werden. Der Austrag dieser organischen Substanzen wird sowohl durch die Auflockerungseinrichtung 83 beziehungsweise deren Spirale 85 als auch durch die Belüftungseinrichtung mit den Belüftungseinheiten 87 bis 93 gefördert.

Bei der Vorrichtung gemäß Figur 2 ist es möglich, auch mehrere nebeneinanderliegende Förderspiralen 190 und/oder mehrere nebeneinanderliegende Austragspiralen 290 einzusetzen. Es ist überdies nicht erforderlich, daß der Behälter 90 in seinem unteren Bereich rund ist. Dies ist insbesondere nur im oberen Bereich des Behälters erforderlich, um die Umlaufströmung aufgrund der tangentialen Einleitung des Feststoff-Flüssigkeits-Gemisches zu ermöglichen.

Aus der Beschreibung ist ohne weiteres ersichtlich, daß anstelle der in den Figuren 1 und 2 erwähnten Spiralen auch Schnecken verwendet werden können, bei denen die Antriebswelle des Motors sich über die gesamte Länge der Schnecke erstreckt. Es wird auch deutlich, daß der Horizontalförderer auch geneigt angeordnet sein kann und einen Winkel von < 90° mit dem auch als Vertikalförderer bezeichneten Austragförderer einschließt.

## Patentansprüche

1. Vorrichtung zum Austragen von Feststoffen aus einem Feststoff-Flüssigkeits-Gemisch, das in ein Auffangbecken eingebracht ist, mit einer Endlosfördereinrichtung, **dadurch gekennzeichnet,** daß das Auffangbecken (3) mindestens einen Wandbereich (41,43,45) aufweist, der mittels einer außerhalb des Auffangbeckens (3) angeordneten Vibrationseinrichtung (47) in Schwingungen versetzbar ist.

2. Vorrichtung nach Anspruch 1, **dadurch gekennzeichnet**, daß mehrere über die Länge des Auffangbeckens (3) verteilt angeordnete, mit der Vibrationseinrichtung (47) zusammenwirkende Wandbereiche (41,43,45) vorgesehen sind.

3. Vorrichtung nach Anspruch 1 oder 2, **dadurch gekennzeichnet**, daß die Vibrationseinrichtung (47) mindestens eine Vibrationseinheit (49,51,53) aufweist, die jeweils einem Wandbereich (41,43,45) zugeordnet ist.

4. Vorrichtung nach einem der vorhergehenden Ansprüche, **dadurch gekennzeichnet**, daß eine Einrichtung (67) zur Erfassung der Dichte beziehungsweise der Höhe der sich dem Gemisch absetzenden Feststoffschicht vorgesehen ist.

5. Vorrichtung nach einem der vorhergehenden Ansprüche, **dadurch gekennzeichnet**, daß die Vibrationseinheiten (49,51,53) der verschiedenen Wandbereiche (41,43,45) separat aktivierbar sind.

6. Vorrichtung nach einem der vorhergehenden Ansprüche, **dadurch gekennzeichnet**, daß die Vibrationseinheiten (49,51,53) in Abhängigkeit von der Dichte der sich absetzenden Feststoffe aktivierbar sind.

7. Vorrichtung nach einem der vorhergehenden Ansprüche, **dadurch gekennzeichnet**, daß die Endlosfördereinrichtung (15) einen Horizontalförderer (17) aufweist.

8. Vorrichtung nach Anspruch 7, **dadurch gekennzeichnet**, daß der Horizontalförderer (17) als Spiralförderer ausgebildet ist, der mindestens eine Förderspirale (19) umfaßt.

9. Vorrichtung nach Anspruch 8, **dadurch gekennzeichnet**, daß die Förderspirale (19) am Grund des Auffangbeckens (3) angeordnet ist.

10. Vorrichtung nach einem der Ansprüche 7 bis 9, **dadurch gekennzeichnet**, daß der Horizontalförderer (17) in Abhängigkeit von der Dichte der sich abgesetzenden Feststoffe ansteuerbar ist.

11. Vorrichtung nach einem der vorhergehenden Ansprüche, **dadurch gekennzeichnet**, daß die Endlosfördereinrichtung (15) einen Austragförderer (27) aufweist.

12. Vorrichtung nach Anspruch 11, **dadurch gekennzeichnet**, daß der Austragförderer (27) als Spiralförderer ausgebildet ist, der mindestens eine Austragspirale (29) umfaßt, die mit der Förderspirale (19) zusammenwirkt.

13. Vorrichtung nach Anspruch 12, **dadurch gekennzeichnet**, daß die Austragspirale (29) in einem Winkel zur Förderspirale (17) angeordnet ist.

14. Vorrichtung nach einem der Ansprüche 11 bis 13, **dadurch gekennzeichnet**, daß der Austragförderer (27) in Abhängigkeit von der Dichte der abgesetzten Feststoffschicht ansteuerbar ist.

15. Vorrichtung nach einem der vorhergehenden Ansprüche, **dadurch gekennzeichnet**, daß der Behälter (90) mit einer Belüftungseinrichtung versehen ist, die mindestens zwei auf verschiedenen in einem Abstand zueinander liegendenden Ebenen (E1,E2) angeordnete Belüftungseinheiten (87,89;91,93) aufweist, die mit einer Gasleiteinrichtung (95) versehen sind.

16. Vorrichtung nach Anspruch 15, **dadurch gekennzeichnet**, daß die Belüftungseinheiten (87 bis 93) mindestens eine Belüftungskerze umfassen, die wenigstens ein mit einem gasförmigen Medium beaufschlagbares, eine gasdurchlässige Wandung aufweisendes Rohr umfassen.

17. Vorrichtung nach Anspruch 16, **dadurch gekennzeichnet**, daß die Belüftungskerzen wenigstens einen Rohrabschnitt aus poröser Keramik aufweisen.

18. Vorrichtung nach einem der Ansprüche 15 bis 17, **dadurch gekennzeichnet**, daß eine obere Belüftungseinheit (87,89) vorgesehen ist, die ein Leitblech (97,99) aufweist, das unterhalb der oberen Belüftungseinheit (87,91) angeordnet ist.

19. Vorrichtung nach Anspruch 18, **dadurch gekennzeichnet**, daß die obere Belüftungseinheit (87,89) im oberen Bereich des Sedimentationsraums angeordnet ist.

20. Vorrichtung nach einem der Ansprüche 15 bis 19, **dadurch gekennzeichnet**, daß eine untere Belüftungseinheit (91,93) vorgesehen ist, die ein Leitblech (101,103) aufweist, das oberhalb der unteren Belüftungseinheit angeordnet ist.

21. Vorrichtung nach Anspruch 20, **dadurch gekennzeichnet**, daß die untere Belüftungseinheit (91,93) im unteren Bereich des Sedimentationsraums angeordnet ist.

22. Vorrichtung nach einem der Ansprüche 15 bis 21, **dadurch gekennzeichnet**, daß obere Belüftungseinheit (87,89) im wesentlichen kontinuierlich mit einem gasförmigen Medium beaufschlagt wird.

23. Vorrichtung nach einem der vorhergehenden Ansprüche 15 bis 22, **dadurch gekennzeichnet**, daß die untere Belüftungseinheit (91,93) in Zeitintervallen betrieben wird, die vorzugsweise kürzer ist als die Betriebszeiten der oberen Belüftungseinheit (87,89).

24. Vorrichtung nach einem der Ansprüche 15 bis 23, **dadurch gekennzeichnet**, daß ein Rührwerk (75) mindestens einen in dem Sedimentationsraum angeordneten Arm (81) aufweist.

25. Vorrichtung nach einem der vorhergehenden Ansprüche 15 bis 24, g**ekennzeichnet durch** eine mit den abgesetzten Feststoffen zusammenwirkende, vorzugsweise als Spirale (85) ausgebildete Auflockerungseinrichtung (83).

26. Vorrichtung nach Anspruch 25, **dadurch gekennzeichnet**, daß die Auflockerungseinrichtung (83) mit dem Rührwerk (75) koppelbar ist.

27. Verfahren zum Austragen von Feststoffen aus einem Feststoff-Flüssigkeits-Gemisch, insbesondere mittels einer Vorrichtung nach einem der Ansprüche 1 bis 14, **dadurch gekennzeichnet**, daß eine Vorverdichtung der in dem Gemisch vorhandenen Feststoffe mit von der Entfernung zum Austragsort der Feststoffe unterschiedlicher Intensität erfolgt.

28. Verfahren nach Anspruch 27, **dadurch gekennzeichnet**, daß die Austragung der Feststoffe in Abhängigkeit von der Dichte der sich absetzenden Feststoffe erfolgt.

29. Verfahren nach einem der Ansprüche 26 bis 28, **dadurch gekennzeichnet**, daß die Austragung der Feststoffe in Abhängigkeit von der Höhe der sich absetzenden Feststoffe erfolgt.
